# EUROPÄISCHE PATENTANMELDUNG

(11) **EP 2 367 107 A1**
(43) Veröffentlichungstag der Anmeldung: **21.09.2011**
(21) Anmeldenummer: 11400008.6
(22) Anmeldetag: 13.01.2011
(51) Int. Cl.: G06F 9/455, G05B 19/418, G09B 9/54

(54) **Verfahren und Vorrichtung zur Bedienung von softwaregesteuerten Geräten**

(30) Priorität: 18.03.2010 DE 102010011873
(71) Anmelder: Safebridge Ug, 20457 Hamburg (DE)
(72) Erfinder: Steden, Ulf, 21509 Glinde (DE)
(74) Vertreter: Klickow, Hans-Henning

(57) **Zusammenfassung**

Das Verfahren und die Vorrichtung dienen zur Bedienung von softwaregesteuerten Geräten. Mindestens ein Teil von Software zur Steuerung von mindestens zwei unterschiedlichen Geräten ist im Bereich eines Datenspeichers bevorratet. Die Software ist derart aktivierbar, daß einem Benutzer nach einer Auswahl eines konkreten Gerätes die für dieses Gerät erforderliche Steuersoftware bereitgestellt und eine Bedienung des Gerätes ermöglicht wird.

## Beschreibung

Die Erfindung betrifft ein Verfahren zur Bedienung von softwaregesteuerten Geräten.

Die Erfindung betrifft darüber hinaus eine Vorrichtung zur Bedienung von softwaregesteuerten Geräten.

Die überwiegende Anzahl der im Einsatz befindlichen elektrischen und elektronischen Geräte sind mit einer Software ausgestattet, die eine Steuerung und Bedienung der Geräte ermöglichen. Für Servicetechniker, die derartige Geräte warten und/oder reparieren und im Zusammenhang mit Schulungen zur Bedienung derartiger Geräte tritt das Problem auf, daß die individuellen Geräte mit sehr unterschiedlichen Steuerungen und Bedienoberflächen ausgestattet sind. Es erweist sich deshalb als äußerst schwierig, wenn ein Servicetechniker oder nicht spezifisch geschultes Bedienpersonal erstmals Reparaturen, Wartungsabläufe oder Bedienabläufe an einem Gerät durchführen soll, das der betreffenden Person noch nicht vertraut ist.

Nachfolgend wird die betreffende Bedienproblematik sowie die erfindungsgemäße Lösung dieser Problematik am Beispiel von Radargeräten beschrieben, die im maritimen Bereich verwendet werden. Diese beispielhafte Beschreibung kann sinngemäß aber auch auf die Bedienung von sämtlichen anderen softwaregesteuerten Geräten übertragen werden, ohne daß dies nachfolgend in jedem Einzelfall nochmals ausdrücklich erwähnt wird.

Aufgabe der vorliegenden Erfindung ist es, ein Verfahren der einleitend genannten Art derart zu verbessern, daß bei einem Benutzer eine erhöhte Vertrautheit mit der Bedienung von softwaregesteuerten Geräten unterstützt wird.

Diese Aufgabe wird erfindungsgemäß dadurch gelöst, daß mindestens ein Teil von Software zur Steuerung von mindestens zwei unterschiedlichen Geräten im Bereich mindestens eines Datenspeichers bevorratet wird und derart aktivierbar ist, daß einem Benutzer nach einer Auswahl eines konkreten Gerätes die für dieses Gerät erforderliche Steuersoftware bereitgestellt und eine Bedienung des Gerätes ermöglicht wird.

Weitere Aufgabe der vorliegenden Erfindung ist es, eine Vorrichtung der einleitend genannten Art derart zu konstruieren, daß eine Bedienung von softwaregesteuerten Geräten erleichtert wird.

Diese Aufgabe wird erfindungsgemäß dadurch gelöst, daß mindestens ein Teil von Software zur Steuerung von mindestens zwei unterschiedlichen Geräten im Bereich mindestens eines Datenspeichers bevorratet ist und daß eine Aktivierung für die Software derart ausgebildet ist, daß nach einer Selektion eines konkreten Gerätes die diesem Gerät zugeordnete Steuersoftware aktivierbar ist.

Durch die Bereithaltung von spezifischer Software für unterschiedliche Geräte ist es möglich, mit wenigen Konfigurierungsabläufen die zur Bedienung eines bestimmten Gerätes erforderliche Software bereitzustellen. Ein zur Reparatur oder Wartung eines spezifischen Gerätes tätiger Servicetechniker kann hierdurch auf eine Sammlung von Software zugreifen, die aktuell benötigte Software aktivieren und das zu wartende Gerät automatisch in einen gewünschten Betriebszustand fahren lassen. Ebenfalls ist es möglich, bereits vor einem unmittelbaren Kontakt mit dem tatsächlichen Gerät die entsprechende Software zu aktivieren und im Zusammenwirken mit einem tatsächlichen Gerät oder einem simulierten Gerät die Bedienung des betreffenden Gerätes zu trainieren. Hierdurch wird es unterstützt, daß bei einem Kontakt mit dem tatsächlichen Gerät die erforderlichen Bedienoperationen ohne großen Zeitverzug durchgeführt werden können.

Eine typische Anwendung erfolgt im Zusammenhang mit Steuersoftware für Radargeräte. Die Radargeräte können beispielsweise für maritime Anwendungen, in Flugzeugen, im Bereich der Flugsicherung oder in militärischen Bereichen eingesetzt werden.

Eine Verwendung an beliebigen Orten wird dadurch unterstützt, daß eine Speicherung der individuellen Steuersoftware des Gerätes in einer räumlichen Nähe zu einer visuellen Anzeige und einer manuellen Eingabeeinrichtung für den Benutzer erfolgt.

Ein universeller Datenzugriff wird dadurch unterstützt, daß eine Speicherung der individuellen Software zur Steuerung des konkreten Gerätes ortsfern zu einem Benutzer erfolgt und daß eine Übertragung über eine Datenverbindung durchgeführt wird.

Im Hinblick auf Anwendungen im Zusammenhang mit Service und Reparatur ist daran gedacht, daß die Steuersoftware mit einem als Hardware vorhandenen Gerät zusammenwirkt.

Bei einer Anwendung für Schulungen erweist es sich als vorteilhaft, daß die Software mit einem das tatsächliche Gerät simulierenden Softwaremodul zusammenwirkt.

Ebenfalls ist im Zusammenhang mit einer Schulung oder einem Bedientraining insbesondere daran gedacht, daß unter Verwendung einer interaktiven Ebene eine Gerätebedienung als Fernbedienung erfolgt. Typischerweise erfolgt eine Fernbedienung derart, daß ein Zugriff auf die Originalsoftware des zu steuernden Gerätes vorgesehen ist.

In den Zeichnungen sind Ausführungsbeispiele der Erfindung schematisch dargestellt. Es zeigen:
- Fig. 1: ein gerätetechnisches Übersichtsbild für eine Anwendung im Servicebereich,
- Fig. 1a: ein gerätetechnisches Übersichtsbild für eine Anwendung im Schulungsbereich,
- Fig. 2: eine vereinfachte funktionelle Darstellung zur Veranschaulichung des Zusammenwirkens der einzelnen Funktionskomponenten und
- Fig. 3: eine Darstellung ähnlich zu Fig. 2 für eine abgewandelte Ausführungsform.

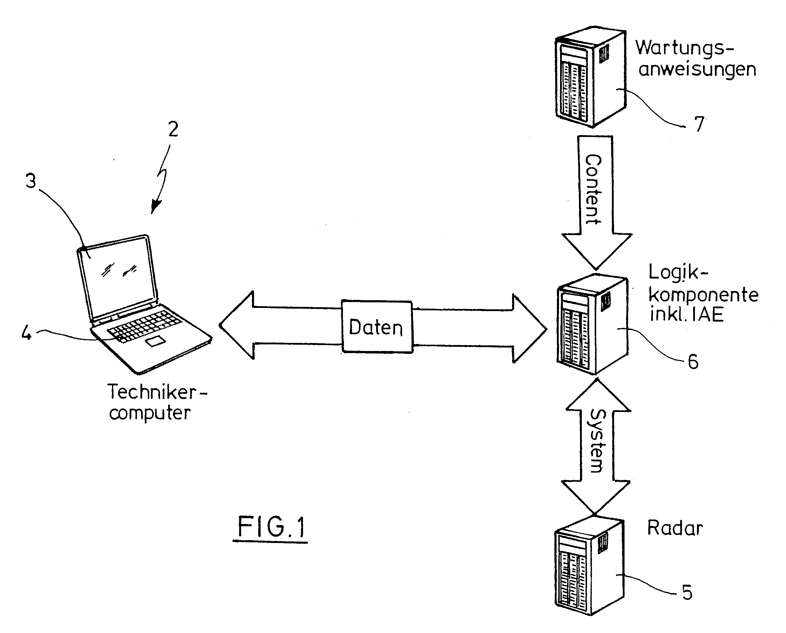

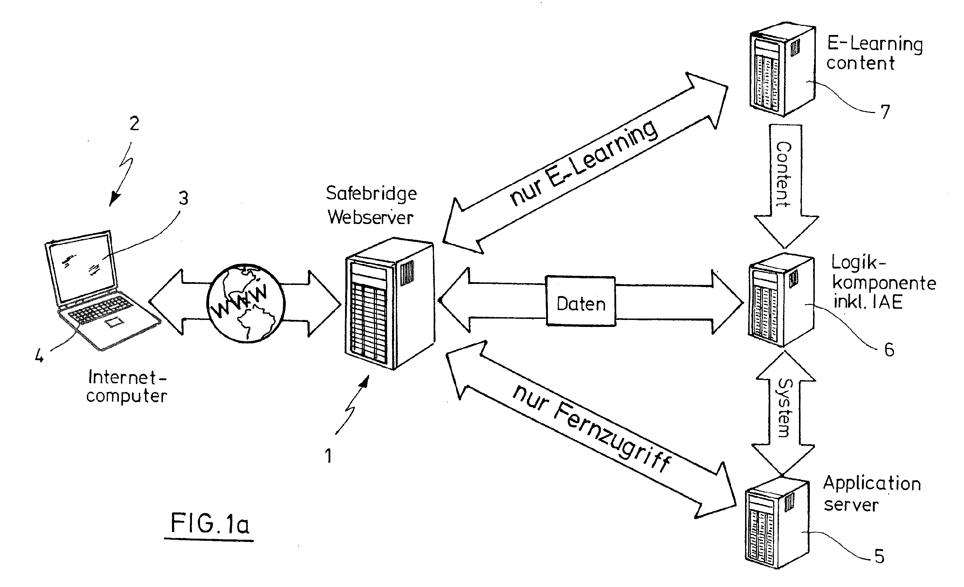

Fig. 1 veranschaulicht ein Ausführungsbeispiel für Serviceanwendungen. Hier ist vorgesehen, daß ein Servicetechniker mit einem Bediencomputer (2) den vorgesehenen Einsatzort aufsucht. Der Bediencomputer (2) verfügt über eine Anzeige (3) und eine Bedieneinrichtung (4). Der Bediencomputer (2) wird unter Zwischenschaltung einer Logikkomponente (6) an ein Radargerät (5) angeschlossen. Unter Verwendung eines Inhaltsspeichers (7) werden beispielsweise Wartungsanweisungen generiert.

Insbesondere ist daran gedacht, dem Servicetechniker mindestens zwei unterschiedliche Funktionalitäten bereitzustellen. Gemäß einer ersten Funktionalität ist es möglich, unter Verwendung der Bedienoberfläche das Radargerät (5) automatisch in einen definierten Zustand zu überführen, um vorgegebene Wartungs- oder Servicearbeiten durchführen zu können. Der definierte Zustand kann beispielsweise einen Parametersatz umfassen, der einen oder mehrere Sätze von Meßwerten des Radargerätes (5) wiedergibt.

Gemäß einer zweiten Funktionalität ist es möglich, im Bereich des Bediencomputers unter Verwendung der Wartungsanweisungen (7) definierte Serviceanweisungen zu generieren, die dem Servicetechniker eine gezielte Bedienung des Radargerätes (5) ermöglichen, ohne daß der Servicetechniker mit allen Funktionalitäten des Radargerätes (5) vertraut sein muß. Gemäß einer bevorzugten Ausführungsform wird dem Servicetechniker im Bereich der Anzeige (3) seines Bediencomputers (2) eine Anzeige bereitgestellt, die der tatsächlichen Anzeige des Radargerätes (5) entspricht.

Nachfolgend wird ein zweites Ausführungsbeispiel für Anwendungen im Zusammenhang mit der Durchführung von Schulungen oder Trainings erläutert.

Gemäß dem Ausführungsbeispiel in Fig. 1a wird im Bereich einer Speichereinrichtung (1) eine Mehrzahl von Software zur Steuerung von Geräten bereitgestellt. Die betreffende Software kann entweder ganz oder teilweise physikalisch im Bereich der Speichereinrichtung (1) abgespeichert sein, gemäß dem dargestellten Ausführungsbeispiel wird als Verbindungselement zur Speichereinrichtung (1) ein Webserver verwendet, der eine beliebige örtliche Abspeicherung und einen Zugriff über das Internet ermöglicht. Die Speichereinrichtung (1) ist an einen Bediencomputer (2) angeschlossen, der vorzugsweise zumindest eine Anzeige (3) und eine Bedieneinrichtung (4) aufweist.

Die Speichereinrichtung (1) ist mit einem Anwendungsserver (5), einer Logikkomponente (6) und einem Inhaltsspeicher (7) gekoppelt. Der Anwendungsserver (5) ist darüber hinaus auch direkt mit der Logikkomponente (6) gekoppelt. Ebenfalls liegt eine direkte Kopplung zwischen der Logikkomponente (6) und dem Inhaltsspeicher (7) vor.

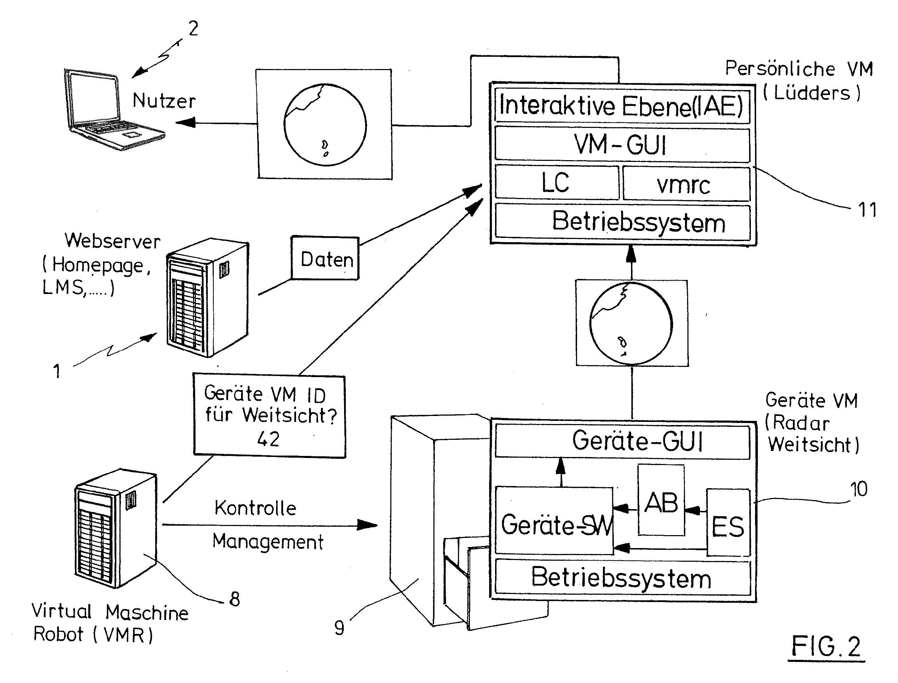

Fig. 2 zeigt ein Funktionsschaltbild zur Veranschaulichung einer Nutzung der Funktionskomponenten zum Training einer Gerätebedienung für einen Benutzer. Von einer Steuereinrichtung (8), die in Fig. 2 als virtual machine robot (VMR) bezeichnet ist, erfolgt eine Triggerung bzw. Ablaufsteuerung für die erforderlichen Vorgänge. Die Steuereinrichtung (8) wählt in Abhängigkeit vom konkret gewünschten technischen Gerät von einem Vorratsspeicher (9) die konkret benötigte Software aus. Die Auswahl erfolgt unter Verwendung einer virtual machine identification (VMID) Der Vorratsspeicher (9) ist vorzugsweise mit einem eigenen Betriebssystem ausgestattet. Der Vorratsspeicher (9) beinhaltet beispielsweise die für unterschiedliche Radargeräte erforderliche Steuersoftware und/oder Gerätesimulationssoftware, die auch als Geräte VM (virtual machine) bezeichnet ist. Im Bereich des Vorratsspeichers (9) wird darüber hinaus zur Simulation von realen Daten ein Simulator (10) vorgehalten, der auch als environment simulator (ES) bezeichnet ist. Des Weiteren kann ein analoges Bauteil (AB) verwendet werden, das physikalisch oder als Simulationsmodul implementiert ist. Übergeordnet ist ein Geräte-GUI (Graphic User Interface).

Im Bereich des Webservers kann gegebenenfalls eine Homepage oder ein learning management system (LMS) bereitgestellt werden.

Basierend auf den Daten im Vorratsspeicher (9) wird für den individuellen Benutzer ein konkret benötigtes Softwaremodul (11) bereitgestellt, das das zugehörige Betriebssystem, eine Steuereinheit (LC, Logic controller) ein Kommunikationsprogramm (VMRC, virtual machine remote console) sowie eine interaktive Ebene (IAE) aufweist.

Bei einer Verwendung durch den Nutzer werden im Rahmen des Benutzungstrainings auf dem Bediencomputer (2) Anzeigen generiert, die Anzeigen des tatsächlichen Gerätes entsprechen. Der Benutzer kann über die interaktive Ebene Bedieneingaben vornehmen, die aufgrund der Nachbildung des tatsächlichen Gerätes einem tatsächlichen Ablauf entsprechende Reaktionen auf der Anzeige generieren. Durch das erfindungsgemäße Konzept werden mehrere Bedienschichten übereinander gelegt.

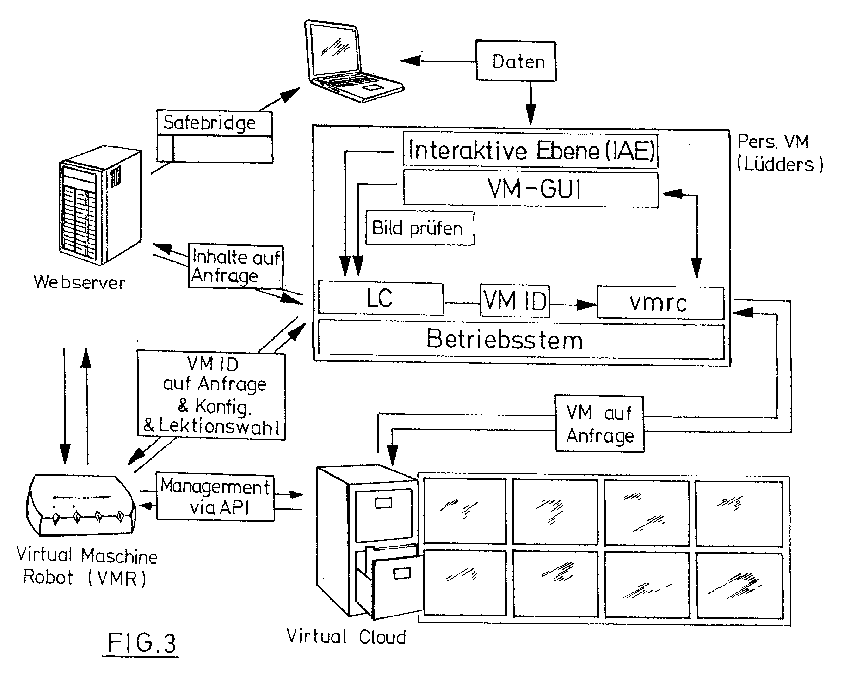

Fig. 3 veranschaulicht einen komplexeren Funktionsablauf im Zusammenhang mit einer Realisierung der Erfindung für ein Bedienungstraining. Auch hier erfolgt die beispielhafte Erläuterung auf Basis von konkret zu simulierenden Radargeräten.

Die interaktive Ebene übt vereinfacht die Funktion einer Lochmaske aus. Die vom Logic controller bereitgestellten Inhalte werden in beweglichen Fenstern angezeigt und Bedienaktivitäten des Benutzers in den beweglichen Fenstern werden an den Logic controller zurückgemeldet. Ebenfalls werden Benutzereingaben unter Verwendung einer Maus oder einer Tastatur des Bediencomputers (2) an den Logic controller weitergeleitet. Die entsprechenden Eingaben führen durch die bereitgestellte Simulationssoftware der tatsächlichen Geräte zu exakt denselben Reaktionen, als wenn die Bedienung eines tatsächlichen Gerätes erfolgen würde.

## Patentansprüche

1. Verfahren zur Bedienung von softwaregesteuerten Geräten, **dadurch gekennzeichnet, daß** mindestens ein Teil von Software zur Steuerung von mindestens zwei unterschiedlichen Geräten im Bereich mindestens eines Datenspeichers bevorratet wird und derart aktivierbar ist, daß einem Benutzer nach einer Auswahl eines konkreten Gerätes die für dieses Gerät erforderliche Steuersoftware bereitgestellt und eine Bedienung des Gerätes ermöglicht wird.

2. Verfahren nach Anspruch 1, **dadurch gekennzeichnet, daß** eine Speicherung der individuellen Steuersoftware des Gerätes in einer räumlichen Nähe zu einer visuellen Anzeige und einer manuellen Eingabeeinrichtung für den Benutzer erfolgt.

3. Verfahren nach Anspruch 1, **dadurch gekennzeichnet, daß** eine Speicherung der individuellen Software zur Steuerung des konkreten Gerätes ortsfern zu einem Benutzer erfolgt und daß eine Übertragung über eine Datenverbindung durchgeführt wird.

4. Verfahren nach einem der Ansprüche 1 bis 3, **dadurch gekennzeichnet, daß** die Steuersoftware mit einem als Hardware vorhandenen Gerät zusammenwirkt.

5. Verfahren nach einem der Ansprüche 1 bis 3, **dadurch gekennzeichnet, daß** die Software mit einem das tatsächliche Gerät simulierenden Softwaremodul zusammenwirkt.

6. Verfahren nach einem der Ansprüche 1 bis 5, **dadurch gekennzeichnet, daß** unter Verwendung einer interaktiven Ebene eine Gerätebedienung simuliert wird.

7. Vorrichtung zur Bedienung von softwaregesteuerten Geräten, **dadurch gekennzeichnet, daß** mindestens ein Teil von Software zur Steuerung von mindestens zwei unterschiedlichen Geräten im Bereich mindestens eines Datenspeichers bevorratet ist und daß eine Aktivierung für die Software derart ausgebildet ist, daß nach einer Selektion eines konkreten Gerätes die diesem Gerät zugeordnete Steuersoftware aktivierbar ist.

8. Vorrichtung nach Anspruch 7, **dadurch gekennzeichnet, daß** der Datenspeicher in einer räumlichen Nähe zu einem Bediencomputer (2) gespeichert ist.

9. Vorrichtung nach Anspruch 7, **dadurch gekennzeichnet, daß** die Steuersoftware in einem ortsfern zu einem Bediencomputer (2) angeordneten Datenspeicher bevorratet ist und daß der Datenspeicher und der Bediencomputer über ein Datennetz miteinander verbindbar sind.

10. Vorrichtung nach einem der Ansprüche 7 bis 9, **dadurch gekennzeichnet, daß** das konkrete Gerät durch ein Softwaremodul nachgebildet ist.
